(19) Europäisches Patentamt
European Patent Office
Office européen des brevets

(11) **EP 2 319 382 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(51) Int Cl.:
*A47L 15/42* *(2006.01)*     *A47L 15/44* *(2006.01)*
*D06F 39/00* *(2006.01)*     *G01N 13/02* *(2006.01)*

(21) Anmeldenummer: **10013665.4**

(22) Anmeldetag: **14.10.2010**

(54) **Geschirrspüler oder Waschmaschine mit einer Messvorrichtung zum Messen der Oberflächenspannung der Waschlauge**

Dishwasher or washing machine with a measuring device for measuring the surface tension of lye

Lave-vaisselle ou lave-linge doté d'un dispositif de mesure pour mesurer la tension de surface de la lessive

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.05.2011 Patentblatt 2011/19**

(73) Patentinhaber: **V-Zug AG**
**CH-6301 Zug (CH)**

(72) Erfinder:
• **Bucher, Benno**
**8706 Meilen (CH)**

• **Gau, Ingo**
**6317 Oberwil (CH)**
• **Dober, Ernst**
**6036 Dierikon (CH)**

(74) Vertreter: **Sutter, Kurt et al**
**E. Blum & Co**
**Patentanwälte VSP**
**Vorderberg 11**
**8044 Zürich (CH)**

(56) Entgegenhaltungen:
**EP-A2- 0 843 170     DE-A1- 3 303 939**
**DE-A1- 4 112 417     DE-A1-102008 040 334**

**Beschreibung**

Gebiet der Erfindung

Die Erfindung betrifft einen Geschirrspüler oder eine Waschmaschine mit einer Messanordnung zum Messen eines von der Oberflächenspannung einer Waschlauge abhängigen Parameters.

Hintergrund

Die Messung der Oberflächenspannung (bzw. eines von dieser abhängigen Parameters) in einem Geschirrspüler oder in einer Waschmaschine erlaubt die Bestimmung der optimalen Tensidkonzentration und so z.B. eine automatische Einstellung der Waschmittelmenge. Dadurch kann der Waschmittelverbrauch gesenkt werden, ohne dass die Reinigungsqualität beeinträchtigt wird. Namentlich nimmt die Oberflächenspannung der Waschlauge bei der anfänglichen Zugabe von Tensiden (Waschmittel) ab, bis sie ein Minimum erreicht, welches typisch bei ca. 27 - 28 mN/m liegt (die genaue Grösse ist Temperatur- und Waschmittelabhängig). Ab dieser Tensidkonzentration (welche "kritische Mizellenkonzentration", c.m.c. genannt wird) führt die Zugabe zusätzlicher Tenside nicht zu einer weiteren Reduktion der Oberflächenspannung, sondern zur Bildung von sog. Mizellen, d.h. Clustern von Tensidmolekülen, welche nicht waschaktiv sind. Deshalb wurde vorgeschlagen, einen Geschirrspüler bzw eine Waschmaschine mit einer Messanordnung zum Messen eines von der Oberflächenspannung einer Waschlauge abhängigen Parameters bereitzustellen.

Ein Gerät mit einer Messanordnung dieser Art ist beispielsweise aus DE10152832 bekannt. Dort wird die Oberflächenspannung gemessen, indem ein Gasstrom in eine Flüssigkeitssäule gedrückt wird, so dass Gasblasen entstehen. Aus dem Druckverlauf bei der Entstehung der Gasblasen kann die Oberflächenspannung bestimmt werden. Diese Lösung ist allerdings verhältnismässig aufwändig, da sie zeitaufgelöste Druckmessungen und eine Pumpe mit sehr gut definiertem Druck benötigt.

Zur Labormessung von Oberflächenspannungen werden zudem sog. Stalagmometer eingesetzt, wie z.B. in US 4 361 032 beschrieben. Bei diesen Geräten wird eine Art Pipette verwendet, in der eine Flüssigkeitssäule steht, welche durch die Pipettenöffnung abtropft. Eine Messung der Tropfenrate bzw. der Flussmenge erlaubt in diesem Fall die Bestimmung eines von der Oberflächenspannung abhängigen Parameters. Diese Messmethode ist jedoch stark von der Höhe der Wassersäule und vom lokalen Luftdruck an der Pipettenöffnung abhängig, sowie von weiteren Grössen, wie z.B. der Flüssigkeitstemperatur, weshalb genaue Messungen schwierig sind.

Darstellung der Erfindung

Es stellt sich deshalb die Aufgabe, ein Gerät der eingangs genannten Art bereitzustellen, in welchem mit einfachen Mitteln aber in genauer Weise ein von der Oberflächenspannung der Waschlauge abhängiger Parameter ermittelt werden kann.

Diese Aufgabe wird vom Gerät gemäss Anspruch 1 gelöst. Demgemäss besitzt die Messanordnung eine Laugenkammer mit mindestens einer ersten und einer zweiten Düsenöffnung, sowie mindestens eine unter den Düsenöffnungen angeordnete Fallstrecke. Die erste Düsenkammer ist höher als die zweite Düsenkammer angeordnet, derart dass die Waschlauge aus der Laugenkammer durch die erste und die zweite Düsenöffnung tritt und tropfenweise mit einer ersten bzw. zweiten Tropfenrate bzw. Flussmenge durch die Fallstrecke fällt. Die Tropfenraten bzw. Flussmengen der beiden Düsenöffnungen sind dabei unterschiedlich: Da die erste Düsenöffnung höher liegt als die Zweite und somit die Wassersäule über der ersten Düsenöffnung kleiner ist als jene über der zweiten Düsenöffnung, ist die erste Tropfenrate bzw. Flussmenge geringer als die Zweite. Die Messanordnung besitzt weiter mindestens eine Sensorvorrichtung, die dazu geeignet ist, die erste und die zweite Tropfenrate bzw. Flussmenge oder eine Differenz zwischen der ersten und der zweiten Tropfenrate bzw. Flussmenge zu bestimmen.

Dieser Ausgestaltung liegt die Erkenntnis zugrunde, dass sich dank der Messung der Tropfenraten bzw. Flussmengen zweier unter unterschiedlichem Laugendruck stehenden Düsenöffnungen einige wichtige Störgrössen (wie z.B. Luftdruck bei den Düsenöffnungen, Temperatur, andere Laugeneigenschaften) zumindest näherungsweise eliminieren lassen, so dass ein Parameter gemessen werden kann, der in erster Linie nur von der Oberflächenspannung abhängt, was eine genauere Messung erlaubt.

Die vorliegende Erfindung eignet sich zum Einsatz in Haushaltgeschirrspülern oder Haushaltwaschmaschinen, aber auch zum Einsatz in gewerblichen Geräten.

Kurze Beschreibung der Zeichnungen

Weitere Ausgestaltungen, Vorteile und Anwendungen ergeben sich aus den abhängigen Ansprüchen und aus der nun folgenden Beschreibung anhand der Figuren. Dabei zeigen:

Fig. 1 eine schematische Darstellung der Komponenten einer Waschmaschine,
Fig. 2 einen Schnitt durch eine erste Ausführung einer Messanordnung
Fig. 3 einen Schnitt durch eine zweite Ausführung einer Messanordnung und
Fig. 4 eine beispielhafte Eichmessung.

Wege zur Ausführung der Erfindung

Geräteaufbau:

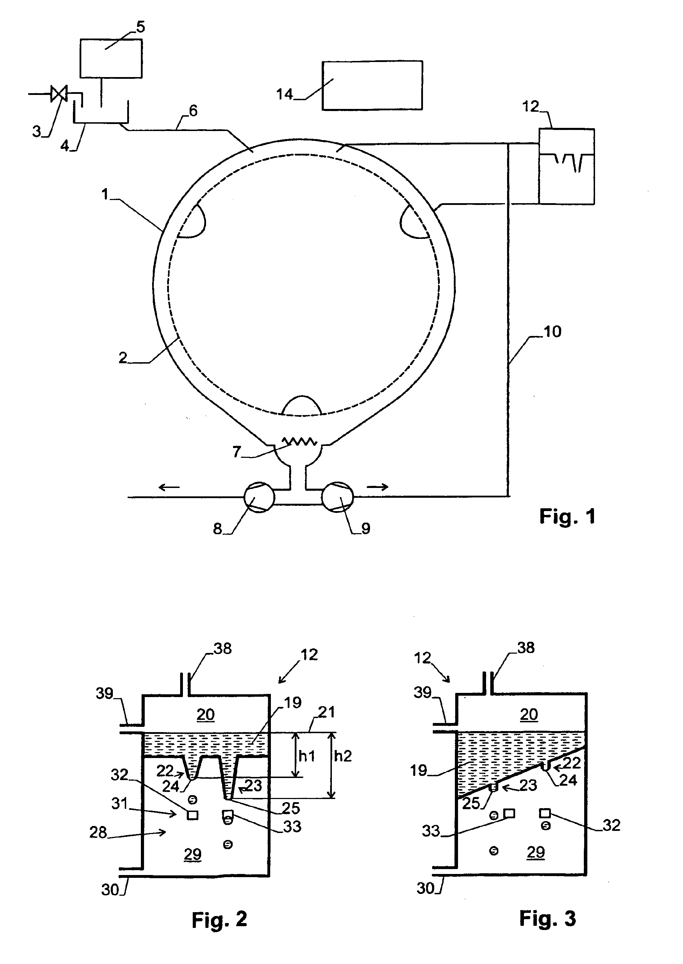

Fig. 1 zeigt die wichtigsten Komponenten einer Waschmaschine, namentlich:

- einen Bottich 1 zur Aufnahme der Waschlauge,
- eine im Bottich 1 angeordnete Trommel 2, welche im vorliegenden Ausführungsbeispiel um eine horizontale Achse drehbar ist,
- eine Frischwasserzufuhr 3,
- einen Mischbehälter 4 zum Mischen von Waschlauge und Waschmittel (Tensid),
- eine Waschmittel-Dosiervorrichtung 5 zum dosierten oder portionenweisen Zuführen von Waschmittel in den Mischbehälter 4,
- eine Leitung 6 zum Zuführen des Wassers zum Bottich 1,
- eine Heizung 7 zum Heizen der Waschlauge im Bottich,
- eine Ablaufpumpe 8 zum Abführen von gebrauchter Waschlauge,
- eine Zirkulationspumpe 9, um Waschlauge vom unteren Bereich des Bottichs durch eine Zirkulationsleitung 10 nach oben zu pumpen,
- eine Messanordnung 12 zum Messen der Oberflächenspannung bzw. eines von derselben abhängigen Parameters,
- eine Steuerung 14 zum Steuern des Geräts.

Die Steuerung 14 ist dazu ausgestaltet, die Dosiervorrichtung 5 abhängig vom Signal der Messanordnung 12 zu steuern, derart, dass in den dazu vorgesehenen Prozessphasen die Oberflächenspannung der Waschlauge einen gewünschten Wert hat, ohne dass hierzu zuviel Waschmittel verwendet wird.

Beispielsweise kann zu Beginn der Hauptwaschphase dem Bottich zunächst Waschlauge mit einer verhältnismässig tiefen Waschmittelkonzentration zugeführt werden. Sodann wird die Waschmittelkonzentration langsam erhöht, indem über die Frischwasserzufuhr eine geringe Menge Frischwasser zugeführt und mit Waschmittel aus der Dosiervorrichtung 5 versetzt wird. Gleichzeitig wird über Zirkulationspumpe 9 der Messanordnung 12 Waschlauge zugeführt, um deren Oberflächenspannung zu bestimmen. Sobald der von der Messanordnung 12 gemessene Parameter anzeigt, dass die Oberflächespannung nahe dem bei Raumtemperatur erreichbaren Minimum von ca. 27 - 28 mN/m ist, indem sie unter einen Schwellwert von z.B. 29 mN/m absinkt, wird die Zufuhr von weiterem Waschmittel gestoppt.

In der Ausführung nach Fig. 1 ist die Messanordnung 12 an der Zirkulationsleitung 10 angeordnet. Denkbar ist jedoch auch eine Anordnung an einem anderen Ort. Vorzugsweise sollte es jedoch möglich sein, ihr Waschlauge bis auf ein vordefiniertes Niveau zuzuführen. Die durch die Messung verbrauchte Waschlauge kann, wie dargestellt, beispielsweise in den Bottich 1 zurückgeführt werden, oder sie kann z.B. in den Abfluss entlassen werden.

Auch wenn Fig. 1 die Messanordnung 12 in einer Waschmaschine zeigt, kann das gleiche Prinzip auch bei einem Geschirrspüler eingesetzt werden. Dort kann die Messanordnung beispielsweise an der Steigleitung zur obersten Sprühdüse angeordnet werden.

Auch der Geschirrspüler ist in diesem Fall mit einer Dosiervorrichtung zum dosierten Zuführen von Reinigungs- und/oder Glanzspülmittel ausgestattet. In diesem Fall kann die Menge von Reinigungs- und/oder Glanzpülmittel beim Hauptwaschen oder Glanzspülen bedarfsgerecht eingestellt werden, wiederum z.B. indem die Oberflächenspannung mit einem vorgegebenen Schwellwert verglichen wird und solange Reinigungs- bzw. Glanzspülmittel zugeführt, bis die Oberflächenspannung unter den vorgegebenen Schwellwert fällt.

Sollte, unabhängig vom Gerätetyp, im Waschverlauf die Oberflächenspannung wieder ansteigen, z.B. weil Tensidmoleküle an Schmutzpartikel gebunden werden, so kann nochmals Tensid zugeführt werden, bis die Oberflächenspannung wieder unter den Schwellwert absinkt. Hierzu können während dem Waschprozess dauernd oder intervallweise Messungen mit der Messanordnung 12 durchgeführt.

Die Messanordnung:

Eine Ausführung der Messanordnung ist in Fig. 2 dargestellt. Diese besitzt eine Laugenkammer 20, in welche Waschlauge 19 geführt wird, und zwar bis zum Erreichen eines vorzugsweise definierten Niveaus 21. In einem unteren Bereich der Laugenkammer 20 ist mindestens eine erste Düse 22 mit einer ersten Düsenöffnung 24 und eine zweite Düse 23 mit einer zweiten Düsenöffnung 25 angeordnet. Die Düsenöffnungen 24, 25 sind dabei jeweils an der Unterseite der Düsen 22, 23 angeordnet. Die Düsen und insbesondere deren Düsenöffnungen sind so bemessen, dass die Waschlauge zumindest bei einem Tensidgehalt nahe am oben erwähnten Schwellwert tropfenweise aus den Düsenöffnungen 24, 25 tritt oder ab einem Schwellwert strahlförmig austritt.

In der Ausführung nach Fig. 2 ist jede Düse 22, 23 rotationssymmetrisch und verjüngt sich gegen unten hin. Andere Düsengeometrien sind jedoch denkbar.

Zum Zuführen von Waschlauge ist ein Einlauf 38 vorgesehen, der in die Laugenkammer 20 mündet. Weiter ist auf Höhe des Niveaus 21 ein Überlauf 39 angeordnet. Soweit die Zufuhr von Lauge durch den Einlauf 38 die Laugenmenge übersteigt, die durch die Düsen 22, 23 fliesst, läuft der Überschuss an Lauge durch den Überlauf 39 ab, so dass die Lauge das Niveau 21 einhält.

Die an den Düsenöffnungen 24, 25 entstehenden Tropfen fallen durch eine Fallstrecke 28, welche im vorliegenden Ausführungsbeispiel von einer einzigen, mit Luft gefüllten Fallkammer 29 gebildet wird. Unten an der Fallstrecke 28 ist ein Abfluss 30 vorgesehen, um die Waschlauge wieder aus der Messanordnung 12 abzuführen.

Weiter umfasst die Messanordnung 12 eine Sensorvorrichtung 31, welche dazu ausgestaltet ist, die Tropfenrate oder Flussmenge bei jeder Düsenöffnung 24 bzw. 25 zu messen, oder die Differenz dieser Tropfenraten oder Flussmengen.

In der Ausführung nach Fig. 2 wird die Messanordnung 31 von zwei Lichtschranken 32, 33 gebildet, von denen eine Erste die Tropfen aus der ersten Düsenöffnung 24 und eine Zweite die Tropfen aus der zweiten Düsenöffnung 25 detektiert. Hieraus werden die Tropfenraten N1 bzw. N2 ermittelt, d.h. die Anzahl Tropfen pro Zeiteinheit (z.B. pro Sekunde) oder, äquivalent hierzu, die (vorzugsweise gemittelten) zeitlichen Abstände der Tropfen. Die Tropfenrate kann somit z.B. in Tropfen pro Zeiteinheit oder Zeitabstand zwischen aufeinanderfolgenden Tropfen ausgedrückt werden. Für die folgende Diskussion gehen wir zur Vereinfachung davon aus, dass die Grössen N1 bzw. N2 die Tropfen pro Zeiteinheit bezeichnen, die Analyse kann jedoch auch für die reziproke Grösse im Wesentlichen in gleicher Weise durchgeführt werden.

Grundsätzlich kann die Tropfenrate N an einer Düse durch eine Funktion f wie folgt ausgedrückt werden:

$$N = f(\sigma, \phi, p, d) \qquad (1)$$

wobei:

$\beta$: Oberflächenspannung,

$\phi$: Wasserparameter, der z.B. den Verschmutzungsgrad, die Viskosität, die Temperatur, die Art der Zusatzstoffe etc. wiedergibt,

p: Laugendruck gegenüber Fallkammerdruck bei der jeweiligen Düsenöffnung,

d: Düsenparameter, abhängig von der Düsengeometrie.

Die Funktion f ist nicht bekannt (für experimentelle Näherungen siehe R. Clift, J. Grace und M. Weber, "Bubbles, Drops, and Particles", Dover Publ. Inc (2005) ) .

Damit ein Tropfen aus einer Düsenöffnung austreten kann, muss der Laugendruck, d.h. in der Ausführung nach Fig. 2 der hydrostatische Druck p1 = p-hl-g bzw. p2 $_=$ p-h2-g grösser sein als der Minimaldruck $p_{min}$ mit

$$P_{min} = 2 / (r \cdot \sigma) \qquad (2)$$

wobei

g: Erdbeschleunigung,

p: Laugendichte,

h1, h2: Der vertikale Abstand zwischen der jeweiligen Düsenöffnung 24, 25 und dem Niveau 21 der Lauge in der Laugenkammer 20

r: Der Radius der jeweiligen Düsenöffnung 24, 25.

Die Tropfenraten N1 und N2 aus der ersten und der zweiten Düsenöffnung sind, gemäss (1)

$$N1 = f(\sigma, \phi, p1, d1) \qquad (3a)$$

$$N2 = f(\sigma, \phi, p2, d2) \qquad (3b)$$

Die Grössen p1, p2, d1 und d2 sind im Wesentlichen konstant und unabhängig von der unbekannten Grösse $\phi$. Durch Verrechnen der beiden Gleichungen (3a, 3b) kann also aus den gemessenen Werten N1, N2 die unbekannte Grösse $\phi$ eliminiert und die Oberflächenspannung $\sigma$ bestimmt werden.

Selbst wenn die Form der Gleichung f nicht bekannt ist, lässt sich aus N1 und N2 die Oberflächenspannung mittels Eichdaten ermitteln. Diese Eichdaten können beispielsweise bestimmt werden, indem die Grössen N1 und N2 für eine Vielzahl von Waschlaugen in unterschiedlichen Zuständen (Verschmutzung, Tensidkonzentration, etc., welche durch Parameter $c_k$ repräsentiert werden) gemessen werden, jeweils zusammen mit der über eine Referenzmessung konventioneller Art ermittelten Oberflächenspannung. So wird ein Datensatz mit Grössen $\{Nl_i, N2_i, \sigma_i, c_k\}$ ermittelt, mit i = 1 bis M, wobei M die Zahl der Eichmessungen darstellt, und k = 1 bis L, wobei L die Anzahl variierender Zustände angibt. Nun kann eine Funktion S

$$\sigma = S(N1, N2, c_1, \ldots c_L) \qquad (4)$$

mit bekannten Verfahren gefitted werden. Entsprechende Verfahren sind dem Fachmann bekannt.

Es zeigt sich, dass in erster Näherung f als Summe zweier Teilfunktionen f1, f2 geschrieben werden kann, wie folgt:

$$N = f1(\sigma, p) + f2(\phi, d, p) \qquad (5)$$

Dabei beschreibt f1 den lokalen Abrissmechanismus an der Düse, welcher stark von der Oberflächenspannung sowie vom Druck abhängt. f2 berücksichtigt das Strömungsverhalten und innere Reibungseffekte entlang der jeweiligen ganzen Düse und hängt (verglichen mit f1) nicht von der Oberflächenspannung nur schwach vom Druck p ab. Wenn der Druckunterschied zwischen p1 und p2 nicht zu gross ist und zusätzlich die Düsengeometrien so gewählt werden, dass ihre Düsenparameter ungefähr gleich sind, d.h. d1 = d2 = d, vereinfacht sich (5) zu:

$$N = f1(\sigma, p) + f2(\phi) \qquad (6)$$

In diesem Falle kann f2 eliminiert werden, indem die Differenz der Tropfenraten N1 - N2 berechnet wird, d.h.

$$N1 - N2 = f1(\sigma, p1) - f1(\sigma, p2) \qquad (7)$$

Somit ist also die Differenz zwischen der ersten Tropfenrate N1 und der zweiten Tropfenrate N2 ein von $\phi$ unabhängiges Mass für die Oberflächenspannung $\sigma$.

Die obigen Gleichungen gelten, wie erwähnt, für den Fall, dass N1 und N2 die Tropfen pro Zeiteinheit angeben. Die Gleichungen (3a, 3b) sind jedoch auch anwendbar, wenn N1 und N2 für den mittleren zeitlichen Abstand aufeinander folgender Tropfen stehen, und, soweit N1 und N2 als Funktion von σ im interessierenden Bereich zumindest näherungsweise linear sind, gilt auch Gleichung (7).

Anstelle der Tropfenrate können auch die gemittelten Flussmengen der Waschlauge durch die beiden Düsenöffnungen 24, 25 gemessen werden, wobei als Flussmenge F das gemittelte Volumen oder die gemittelte Masse Waschlauge pro Zeiteinheit verstanden wird. Näherungsweise ergibt sich in diesem Fall, analog zu Gleichung (3a, 3b):

$$F1 = V1(\sigma) \cdot f(\sigma, \phi, p1, d1) \qquad (8a)$$

$$F2 = V2(\sigma) \cdot f(\sigma, \phi, p2, d2) \qquad (8b)$$

wobei V1 und V2 die Tropfenvolumen sind. Die unbekannte Grösse $\phi$ kann durch Verrechnen der Grössen F1 und F2 eliminiert werden. Wiederum kann also z.B. mittels Eichdaten aus F1 und F2 die Oberflächenspannung σ (oder ein davon abhängiger Parameter) bestimmt werden.

Werden die Flussmengen F1 und F2 gemessen, so ist die Sensorvorrichtung 12 mit Flusssensoren auszugestalten. Beispielsweise kann die Sensorvorrichtung 12 zwei thermische Massenflusssensoren umfassen, von denen einer an der ersten Düse 22 und der Andere an der zweiten Düse 23 angeordnet ist und die beide den momentanen Massenfluss messen. Der Massenfluss wird sodann über eine bestimmte Zeit integriert oder gemittelt, um die Flussmengen F1 und F2 zu erhalten.

Weiter ist es denkbar, dass sowohl die Flussmengen F1, F2 als auch die Tropfenraten N1, N2 bestimmt werden, so dass vier Messwerte ermittelt werden können, die über das Gleichungssystem der Gleichungen (3a, 3b, 8a, 8b) miteinander verknüpft sind. Dies erlaubt eine noch genauere Messung der Oberflächenspannung oder eines von der Oberflächenspannung abhängigen Parameters.

In der in Fig. 2 dargestellten Ausführung, ragen die Düsen von der Unterseite der Laugenkammer 20 in die Fallkammer 29, wobei die erste Düse 22 kürzer als die zweite Düse 23 ist und weniger weit in die Fallkammer 29 hineinragt. Wie oben erwähnt, werden die Düsengeometrien vorzugsweise so gewählt, dass bei vernachlässigbarer Oberflächenspannung (d.h. keine Tropfenbildung, sondern lediglich Flüssigkeitsstrahl), die Durchflussmengen bei beiden Düsen ungefähr gleich sind. Um dies bei der Anordnung gemäss Fig. 2 zu erreichen, sollte die erste Düse Düsenöffnung mit grösserem Durchmesser aufweisen als die Zweite.

In der Ausführung nach Fig. 2 liegen die oberen Enden der beiden Düsen 22, 23 auf gleicher Höhe, nämlich auf der Höhe der horizontalen Unterseite der Laugenkammer 20. Fig. 3 zeigt demgegenüber eine Ausführung, bei welcher die beiden Düsen gleichen Durchmesser und gleiche Länge haben, aber ihre oberen Enden vertikal zueinander versetzt sind. Hierzu verläuft die Unterseite der Laugekammer 20 geneigt.

In den soweit beschriebenen Ausführungsbeispielen waren jeweils zwei Düsenöffnungen auf unterschiedlichen Höhen vorgesehen. Um die Qualität der Messung zu verbessern, können jedoch auch mehr als zwei Düsenöffnungen vorgesehen sein, von denen zumindest zwei, vorzugsweise mehr als zwei, auf unterschiedlichen Höhen angeordnet sind. Die so gemessenen Tropfenraten Ni oder Flussmengen Fi können z.B. wiederum mittels eines Eichdatensatzes in die Oberflächenspannung σ umgerechnet werden.

Vorzugsweise sollten die Dimensionierung der Düsen und die Höhen h1 und h2 so gewählt werden, dass zumindest bei Oberflächenspannungen im Bereich von 27 bis ca. 40 mN/m aus beiden Düsenöffnungen 24, 25 Tropfen austreten, und der Druckunterschied bzw. der Höhenunterschied sollte so bemessen sein, dass im genannten Bereich eine möglichst stark unterschiedliche Abhängigkeit der Raten N1 und N2 von der Oberflächenspannung beobachtet werden kann.

Konkrete Ausführungen, welche diese Bedingungen erfüllten, liegen z.B. vor, wenn bei der Ausführung gemäss Fig. 2 die folgenden Dimensionen verwendet werden:

$$h1 = 0.5 \text{ bis } 3 \text{ cm}$$

$$h2 = 0.5 \text{ bis } 3 \text{ cm}$$

Durchmesser der ersten Düsenöffnung zwischen 0.2 und 1.5 mm.

Durchmesser der zweiten Düsenöffnung zwischen 0.2 und 1.5 mm.

Messresultate:

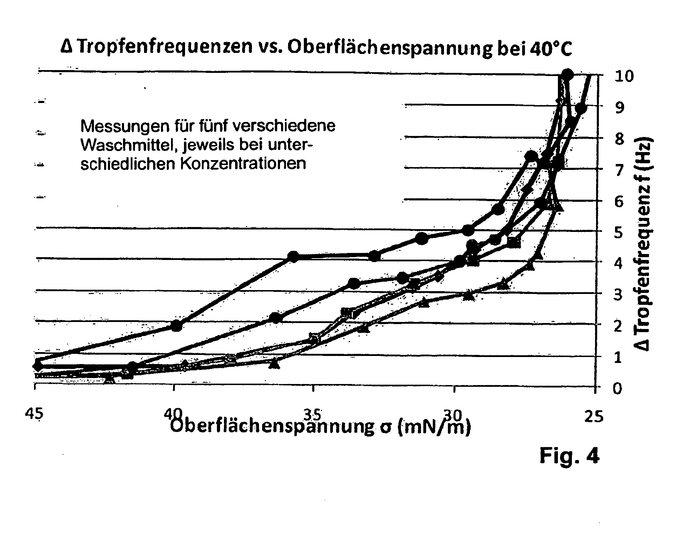

Fig. 4 zeigt konkret ermittelte Messdaten. Dabei wurden Messungen mit unterschiedlichen Textilwaschmitteln verschiedener Hersteller durchgeführt. Für jedes Waschmittel wurde die Waschmittelkonzentration allmählich erhöht, während gleichzeitig die Tropfenraten bzw. - frequenzen gemessen wurden. Zudem wurde die Oberflächenspannung $\sigma$ in konventioneller Weise mit einem Blasendruckmessgerät gemessen.

Die Messanordnung entsprach der Ausführung nach Fig. 2, wobei h1 = 16.5 mm, h2 = 21.5 mm. Der Durchmesser der ersten Düsenöffnung 24 betrug 0.7 mm, jener der zweiten Düsenöffnung 25 lag bei 0.3 mm.

In Fig. 4 ist der Frequenzunterschied $\Delta N$ = N1 - N2 gegen die in konventioneller Weise gemessene Oberflächenspannung aufgetragen. Wie es sich zeigt, ergibt sich eine deutliche Beziehung zwischen $\Delta N$ und der Oberflächenspannung $\sigma$, welche nur wenig vom Waschmittel abhängt. Die tiefste erreichbare Oberflächenspannung liegt bei ca. 27 mN/m (temperaturabhängig). Im Falle von Fig. 4 kann z.B. angenommen werden, dass bei einem Ansteigen der Differenzfrequenz $\Delta N$ auf 7 Hz der oben genannte Schwellwert für die Oberflächespannung unterschritten ist.

Wie Fig. 4 zeigt, genügt es also beispielsweise die Differenz $\Delta N$ = N1 - N2 als einen von der Oberflächenspannung abhängigen Parameter zu messen, um so die Waschmittelzugabe zu steuern.

Bemerkungen:

Bei einem Höhenunterschied $\Delta h$ = h1 - h2 = 5 mm beträgt der Druckunterschied $\Delta p$ = p1 - p2 ca. 0.5 hPa. Es zeigt sich, dass der Luftdruck oberhalb der Laugenkammer 20 einerseits und in der Fallkammer 29 andererseits variiert, und zwar im Bereich von Dekapascal. Diese Druckschwankungen führen zu messbaren Änderungen der Tropfenraten, die aber dank der vorliegenden Technik weitgehend kompensiert werden. Auch meteorologische Druckschwankungen, welche im hPa-Bereich liegen, haben einen Einfluss auf die Raten N1 und N2, aber auch sie können durch gegenseitiges Verrechnen der Grössen N1 und N2 weitgehend kompensiert werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

**Patentansprüche**

**1.** Geschirrspüler oder Waschmaschine mit einer Messanordnung (12) zum Messen eines von der Oberflächenspannung einer Waschlauge abhängigen Parameters, **dadurch gekennzeichnet, dass** die Messanordnung (12) eine Laugenkammer (20) mit mindestens einer ersten und einer zweiten Düsenöffnung (24, 25) sowie eine unter den Düsenöffnungen (24, 25) angeordnete Fallstrecke aufweist, wobei die erste Düsenöffnung (24) höher als die zweite Düsenöffnung (25) angeordnet ist, derart, dass die Waschlauge aus der Laugenkammer (20) durch die erste und die zweite Düsenöffnung (24, 25) tritt und tropfenweise mit einer ersten bzw. zweiten Tropfenrate bzw. Flussmenge durch die Fallstrecke fällt, wobei die Messanordnung (12) weiter mindestens eine Sensorvorrichtung (32, 33) aufweist zum Messen der ersten und der zweiten Tropfenrate bzw. Flussmenge oder einer Differenz zwischen der ersten und der zweiten Tropfenrate- bzw. Flussmenge.

**2.** Geschirrspüler oder Waschmaschine nach einem der vorangehenden Ansprüche, wobei die Sensorvorrichtung (32, 33) dazu ausgestaltet ist, die erste und die zweite Tropfenrate oder die Differenz zwischen der ersten und der zweiten Tropfenrate zu bestimmen.

**3.** Geschirrspüler oder Waschmaschine nach Anspruch 2, wobei die Sensorvorrichtung (32, 33) dazu ausgestaltet ist, die Differenz zwischen der ersten und der zweiten Tropfenrate- bzw. Flussmenge zu bestimmen.

**4.** Geschirrspüler oder Waschmaschine nach einem der vorangehenden Ansprüche, wobei die Sensorvorrichtung dazu ausgestaltet ist, die erste und die zweite Flussmenge oder eine Differenz zwischen der ersten und der zweiten Flussmenge zu bestimmen.

**5.** Geschirrspüler oder Waschmaschine nach einem der vorangehenden Ansprüche, wobei die Laugenkammer (20) oberhalb einer Fallkammer (29) angeordnet ist, wobei die Fallkammer (29) die Fallstrecke bildet, und wobei die erste und die zweite Düsenöffnung (24, 25) von einer ersten und einer zweiten Düse (22, 23) gebildet werden, an deren Unterseiten die erste bzw. zweite Düsenöffnung (24, 25) angeordnet sind.

**6.** Geschirrspüler oder Waschmaschine nach Anspruch 5, wobei die erste Düse (22) kürzer ist und weniger weit in die Fallkammer (29) hineinragt als die zweite Düse (23).

7. Geschirrspüler nach Anspruch 5, wobei die erste Düsenöffnung (24) einen grösseren Durchmesser aufweist als die zweite Düsenöffnung (25).

8. Geschirrspüler oder Waschmaschine nach Anspruch 5, wobei die oberen Enden der ersten und der zweiten Düse (22, 23) vertikal zueinander versetzt sind.

9. Geschirrspüler oder Waschmaschine nach Anspruch 8, wobei die erste und die zweite Düse (22, 23) gleiche Länge und die erste und die zweite Düsenöffnung (24, 25) gleichen Durchmesser haben.

10. Geschirrspüler oder Waschmaschine nach einem der vorangehenden Ansprüche, wobei die Messanordnung (12) mehr als zwei Düsenöffnungen (24, 25) aufweist.

11. Geschirrspüler oder Waschmaschine nach Anspruch 10, wobei mehr als zwei der Düsenöffnungen (24, 25) auf unterschiedlichen Höhen angeordnet sind.


**Claims**

1. Dish washer or washing machine with a measurement arrangement (12) for measuring a parameter depending on the surface tension of a suds, **characterized in that** the measurement arrangement (12) has a suds chamber (20) with at least a first and a second nozzle opening (24, 25) as well as a drop section arranged below the nozzle openings (24, 25), wherein the first nozzle opening (24) is arranged higher than the second nozzle opening (25), in such a way that the suds travels out of the suds chamber (20) through the first and the second nozzle opening (24, 25) and falls through the drop section dropwise with a first or a second drop rate or flow rate respectively, wherein the measurement arrangement (12) further has at least a sensor device (32, 33) for measuring the first and the second drop rate or flow rate respectively, or a difference between the first and the second drop rate or flow rate respectively.

2. Dish washer or washing machine according to one of the preceding claims, wherein the sensor device (32, 33) is adapted to measure the first and the second drop rate or the difference between the first and the second drop rate.

3. Dish washer or washing machine according to claim 2, wherein the sensor device (32, 33) is adapted to measure the difference between the first and the second drop rate or flow rate respectively.

4. Dish washer or washing machine according to one of the preceding claims, wherein the sensor device is adapted to measure the first and the second flow rate or a difference between the first and the second flow rate.

5. Dish washer or washing machine according to one of the preceding claims, wherein the suds chamber (20) is arranged above a drop chamber (29), wherein the drop chamber (29) forms the drop section, and wherein the first and the second nozzle opening (24, 25) are formed by a first and by a second nozzle (22, 23), on the bottom side of which the first or the second nozzle opening (24, 25) are arranged.

6. Dish washer or washing machine according to claim 5, wherein the first nozzle (22) is shorter and protrudes to a lesser amount into the drop chamber (29) than the second nozzle (23).

7. Dish washer according to claim 5, wherein the first nozzle opening (24) has a larger diameter than the second nozzle opening (25).

8. Dish washer or washing machine according to claim 5, wherein the upper ends of the first and the second nozzle (22, 23) are vertically shifted with respect to one another.

9. Dish washer or washing machine according to claim 8, wherein the first and the second nozzle (22, 23) have the same length and the first and the second nozzle opening (24, 25) have the same diameter.

10. Dish washer or washing machine according to one of the preceding claims, wherein the measurement arrangement (12) has more than two nozzle openings (24, 25) .

**11.** Dish washer or washing machine according to claim 10, wherein more than two nozzle openings (24, 25) are arranged at different levels.

**Revendications**

**1.** Lave-vaisselle ou machine à laver avec un arrangement de mesure (12) pour mesurer un paramètre dépendant de la tension superficielle d'une liqueur de lavage, **caractérisé en ce que** l'arrangement de mesure (12) a une chambre de liqueur de lavage (20) avec au moins une première et une deuxième ouverture de buse (24, 25) et un parcours de chute arrangé au-dessous des ouvertures de buse (24, 25), la première ouverture de buse (24) étant arrangée plus haut que la deuxième ouverture de buse (25), de sorte que la liqueur de lavage sort de la chambre de liqueur de lavage (20) à travers la première et la deuxième ouverture de buse (24, 25) et tombe goutte-à-goutte à travers le parcours de chute avec un premier ou un deuxième taux de goutte ou de flux, l'arrangement de mesure (12) ayant en outre au moins un dispositif capteur (32, 33) pour mesurer le premier ou le deuxième taux de goutte ou bien de flux ou une différence entre le premier et le deuxième taux de goutte ou bien de flux.

**2.** Lave-vaisselle ou machine à laver selon l'une des revendications précédentes, le dispositif capteur (32, 33) étant adapté à déterminer le premier ou le deuxième taux de goutte ou la différence entre le premier ou le deuxième taux de goutte.

**3.** Lave-vaisselle ou machine à laver selon la revendication 2, le dispositif capteur (32, 33) étant adapté à déterminer la différence entre le premier ou le deuxième taux de goutte ou bien de flux.

**4.** Lave-vaisselle ou machine à laver selon l'une des revendications précédentes, le dispositif capteur étant adapté à déterminer le premier ou le deuxième taux de flux ou une différence entre le premier ou le deuxième taux de flux.

**5.** Lave-vaisselle ou machine à laver selon l'une des revendications précédentes, la chambre de liqueur de lavage (20) étant arrangée au-dessus d'une chambre de chute (29), la chambre de chute (29) formant le parcours de chute, et la première et la deuxième ouverture de buse (24, 25) étant formées par une première et une deuxième buse (22, 23), du côté bas desquelles la première et la deuxième ouverture de buse (24, 25) sont arrangées.

**6.** Lave-vaisselle ou machine à laver selon la revendication 5, la première buse (22) étant plus courte et faisant saillie moins loin dans la chambre de chute (29) que la deuxième buse (23).

**7.** Lave-vaisselle selon la revendication 5, la première ouverture de buse (24) ayant un diamètre supérieur à celui de la deuxième ouverture de buse (25).

**8.** Lave-vaisselle ou machine à laver selon la revendication 5, les extrémités supérieures de la première et la deuxième buse (22, 23) étant verticalement décalées l'une par rapport à l'autre.

**9.** Lave-vaisselle ou machine à laver selon la revendication 8, la première et la deuxième buse (22, 23) ayant la même longueur et la première et la deuxième ouverture de buse (24, 25) ayant le même diamètre.

**10.** Lave-vaisselle ou machine à laver selon l'une des revendications précédentes, l'arrangement de mesure (12) ayant plus de deux ouvertures de buse (24, 25).

**11.** Lave-vaisselle ou machine à laver selon la revendication 10, plus que deux ouvertures de buse (24, 25) étant arrangées aux niveaux différents.

EP 2 319 382 B1

**Fig. 1**

**Fig. 2**

**Fig. 3**

10

Δ Tropfenfrequenzen vs. Oberflächenspannung bei 40°C

Messungen für fünf verschiedene
Waschmittel, jeweils bei unterschiedlichen Konzentrationen

Oberflächenspannung σ (mN/m)

Δ Tropfenfrequenz f (Hz)

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10152832

- US 4361032 A

**In der Beschreibung aufgeführte Nicht-Patentliteratur**

- **R. CLIFT ; J. GRACE ; M. WEBER.** Bubbles, Drops, and Particles. Dover Publ. Inc, 2005